# EUROPEAN PATENT SPECIFICATION

(11) **EP 3 580 391 B1**
(45) Date of publication and mention of the grant of the patent: **31.03.2021**
(21) Application number: 18708202.9
(22) Date of filing: 01.02.2018
(51) Int. Cl.: D21G 1/02, D06F 67/02, F16C 13/00, F28F 5/02, B30B 15/34

(54) **HEATABLE ROLL**
BEHEIZBARE WALZE
ROULEAU CHAUFFANT

(30) Priority: 08.02.2017 IT 201700013598
(43) Date of publication of application: 18.12.2019
(73) Proprietor: Barnini S.r.l., 56022 Castelfranco Di Sotto PI (IT)
(72) Inventor: SIMONI, Claudio, 56029 Santa Croce Sull'Arno PI (IT); GROSSI, Roberto, 57027 San Vincenzo LI (IT)
(74) Representative: Papa, Elisabetta
(86) International application number: PCT/IB2018/050628
(87) International publication number: WO 2018/146583

(56) References cited:
- EP-A1- 1 130 152
- ES-A1- 2 211 364

## Description

### Technical field of the invention

The present invention relates to the field of industrial machines, in particular to industrial machines using heated roller.

More particularly, the present invention relates to a rotating roller for rotary machines provided with a mixed heating system of the electric type with a heat transfer fluid.

### Background of the invention

Several industries, such as in leather, fabric, paper and plastic material processing field, use, for a variety of activities, machines comprising heated rollers for their operation.

EP1130152 discloses, for example, a dryer-ironer apparatus wherein the fabric is pressed between a heated ironing cylinder and one or more endless belts which are in contact with said cylinder on part of its circumference. This document discloses the features of the preamble of present claim 1.

The heating systems adopted for heating the rollers are many: steam systems, magnetic induction systems and/or, for the most performing rollers, mixed systems, using an electrical resistance that supplies heat to a heat transfer fluid, typically synthetic oil, in contact with the inner mantle surface of the roller.

For example, ES2211364 describes a solution according to the latter type, wherein the heatable roller is provided with annular peripheral chamber filled with a heat-carrying fluid comprising a liquid phase and a vapor phase at the working temperature.

Other known solutions provide a roller inside of which there is a gap wherein hot oil circulates. The oil is heated in a remote heating assembly which, through a pipe, is conveyed to the roller with the aid of, for example, a rotating joint which allows an oil inlet and outlet for an optimal recirculation.

However, this solution has limitations, mainly due to the construction complexity due to the presence of the oil rotary distributors and to the size of the external heating assembly.

Known solutions designed to overcome these limits, provide a roller provided with an inner chamber completely filled with oil and wherein the electrical resistances are inserted directly in contact with the latter. In this case the roller requires an external expansion tank to compensate the pressure variations due to the heating of the oil inside it.

This configuration, although it guarantees a good uniformity of heat on the mantle, has the disadvantage of requiring large volumes of oil which increase the thermal inertia of the roller and of laborious periodic maintenance operations which increase the machine time, as well as high risks of oil leaks.

Rollers with internal resistance and sealed oil chamber have been developed to overcome these problems. This solution provides to fill with oil the gap formed between a jacket inside the roller mantle, wherein the resistance is inserted, and the mantle itself, typically for about 75% of the available volume. The resistance, being in contact with air, facilitates maintenance operations also reducing the perishability of the oil, also favoring an all in all uniform heat transfer.

However, rollers with these characteristics have the disadvantage of providing stringent design limits that are reflected in constructive heaviness and high consumption. In fact, with reduced diameters inner jacket, there is the risk of undesirable overheating of the oil, while at higher diameters a considerable quantity of oil is necessary to ensure, with a sufficient covering of the inner jacket containing the resistance, a good thermal efficiency. The latter condition also entails high oil/air volume ratios that are risky for the maximum operating pressures that can be reached inside the roller, due to the expansion of the oil. Finally, the latter results in contact with the air, incurring in possible crystallization phenomena on the surface of the jacket exposed to the irradiation of the resistance.

### Summary of the invention

The technical problem placed and solved by the present invention is therefore to overcome the problems described above, and this is achieved by means of a rotating roller as defined in claim 1.

In particular, it is an object of the present invention to provide a rotary roller for rotary machines which has high efficiency characteristics and is constructively versatile.

It is also an object of the present invention to provide a rotating roller which reduces management and operating costs and decreases the time required for maintenance operations.

Further characteristics of the present invention are defined in the corresponding dependent claims.

The present invention relates to a rotary roller for rotary machines that use heated rollers in their processes, for example suitable for use in a leather processing machine. The roller has a hollow casing, typically cylindrical, provided with a mantle wall, internally exposed to a heat transfer fluid.

The roller also provides a heating assembly comprising at least one hollow body, arranged internally and, preferably, coaxially to the casing, so as to define an annular region comprised between the mantle wall and the at least one hollow body. The latter also has inside a sealed chamber, isolated from the annular region, wherein heating means for heating it are housed.

The roller then comprises filling means arranged in the annular region and shaped so as to partially occupy the latter. The overall configuration of the roller is such that in the annular region a residual volume is therefore defined, intended to receive, in use, the heat transfer fluid in such a way as to allow the fluid to completely immerse the heating assembly in each operating position of the roller.

This solution allows to improve the efficiency of a rotating roller for rotary machines in terms of obtainable thermal yields and durability under operating conditions.

In particular, the fact that the hollow body, containing the heating means, is completely immersed in the heat transfer fluid avoids possible overheating of its surface in contact with the aforementioned fluid. Therefore, the risk of "cracking" phenomena that deteriorate the thermodynamic properties of the latter is considerably reduced, thus allowing its replacement less frequently.

Furthermore, the particular configuration of the filling means allows to reduce the amount of fluid to be used, and therefore to be heated, resulting in a lower power necessary for heating the roller mantle wall, as well as evident advantages in terms of environmental impact.

These advantages are also reflected in a reduction in management costs and a significant reduction in the heating time of the roller with the same installed power, also due to the fact that it is possible to heat the roller in all its operating positions, that is without it being necessarily and preliminarily put in rotation.

Advantageously, a preferred embodiment of the invention provides that the filling means comprise a plurality of cylindrical tubular elements provided with a hermetically sealed cavity and arranged to surround one or more hollow bodies, further having a development axis preferably inclined with respect to the axis of development of the at least one hollow body.

This solution allows a better stirring capacity of the heat transfer fluid and gives the latter swirling motions, useful for increasing the thermal uniformity of the exposed mantle portion during the rotation of the roller.

Advantageously, the roller according to the present invention preferably provides that the chamber of the at least one hollow body wherein the heating means are housed comprises a removable element at a proximal region at one end of the casing, so as to allow access to the heating means from outside the roller.

This solution makes it possible to further reduce the maintenance time, favoring the associated operations, since the heating means are in a position easily accessible to an operator.

Other advantages, features and used modes of the present invention will result evident from the following detailed description of its preferred embodiments, shown by way of example and not for limitative purposes.

### Brief description of the drawings

Reference will be made to the drawings shown in the attached figures, wherein:
- figures 1 and 2 respectively show a perspective view and a cutaway drawing of a preferred embodiment of the rotating roller according to the present invention;
- figure 3 shows an exploded view of the roller illustrated in figure 1;
- figures 4A, 4B and 4C each show a view along a cross section of different embodiments of a first component - the filling means - of the rotating roller according to the present invention;
- figure 5 shows a view along a longitudinal section of an alternative embodiment of a second component - the heating assembly - of the rotating roller according to the present invention;
- figures 6 and 7 show photographs of constructional details of a third component - the casing - of a preferred embodiment of the rotating roller according to the present invention;
- figures 8 and 9 show photographs of constructional details of a fourth component - the electromechanical coupling means - of a preferred embodiment of the rotating roller according to the present invention.

### Detailed description of preferred embodiments

The present invention will be described below with reference to the above figures.

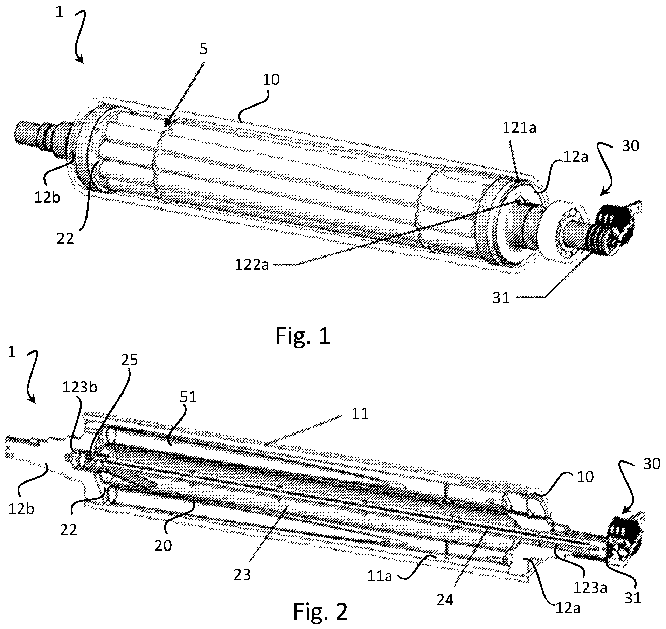

With initial reference to figures 1 and 2, an overview of a preferred embodiment of a rotating roller 1 according to the present invention is shown.

Preferably, the intended use of this roller 1 is provided for insertion into a rotary machine comprising heated rollers. Examples of a preferred application, although not limitative for the present invention, of rotary machinery suitable for receiving such a roller 1, are the machines used in the tanning industry in leather processing activities, such as presses or others.

In any case, the roller 1 according to the present invention is suitable for use in a rotary machinery for any process and industrial sector wherein machines that need heated rollers are used for their operation.

In the most general terms, the roller 1 comprises a casing 10, a heating assembly 20 inserted therein and coupling means 30 to allow rotation and an electric supply of the roller 1.

The casing 10 - shown in transparency to better facilitate the view of the components - is a hollow element, whose side surface comprises a mantle wall 11.

In use, said wall 11 is exposed, preferably by coming into contact with it through an inner surface 11a thereof, to a heat transfer fluid which is used as a heat-carrying fluid since, once inserted into the roller 1, it is heated by the heating assembly 20 and transfers the heat received to said mantle wall 11.

As can be seen from figure 1, both the ends of the casing 10 are closed by a respective hub 12a, 12b which allows the engagement and the support of the roller 1 inside the machinery wherein the roller is mounted.

The hubs 12a, 12b also cooperate with the structure of the casing 10 in order to guarantee the tight seal of the roller 1, once the heat transfer fluid is inside it.

Moreover, preferably at one of the two hubs, the roller 1 has a rotating electric manifold 31, per se known to the person skilled in the art, which allows the transmission of electrical and/or power signals from a static structure to a rotating one, that is roller 1, continuously on the 360°.

The manifold 31 is connected to the heating assembly 20 in such a way as to guarantee the electrical supply to the latter and is made up of a plurality of components, which will be discussed in more detail below.

Moreover, advantageously, in a preferred embodiment of the invention, the casing 10 has one or more seats configured to receive, for example, an auxiliary device suitable for monitoring the operating parameters of the roller 1, such as the temperature of the heat transfer fluid therein contained.

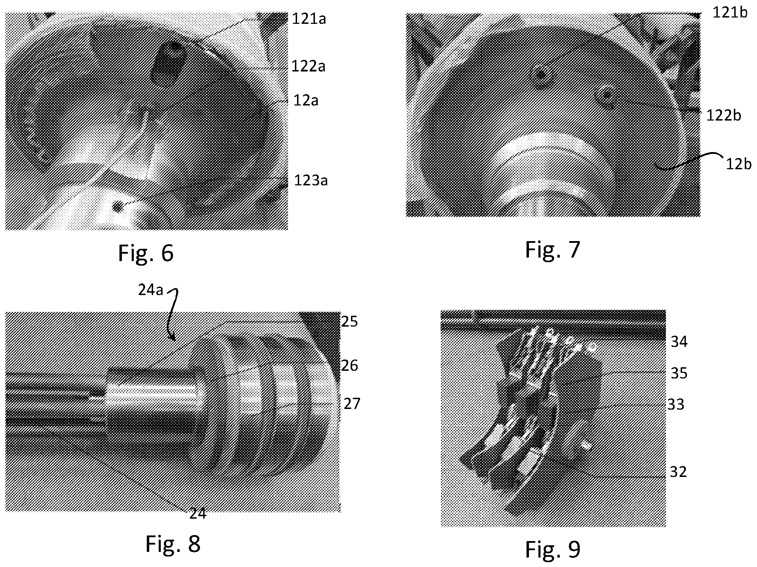

The photographs of figures 6 and 7 exemplify a possible positioning of said seats.

Advantageously, the hub 12a in correspondence of the manifold 31 comprises a first hole 121a obtained in correspondence of the mantle wall 11 and a second hole 122a obtained in correspondence of the heating assembly 20.

Both the aforementioned holes 121a, 122a lead to a respective well - not visible in the figures - which sinks inside the roller 1 and is fluidically isolated therefrom. A further hole 123a is also foreseeable for the passage of suitable cables for the connection of any auxiliary devices to the manifold 31.

In this example, the hub 12b positioned at the opposite end provides a pair of holes 121b, 122b dedicated to the loading and the monitoring of the level of the heat transfer fluid required for the roller 1.

The described hole configuration allows to obtain an efficient control on the operating parameters of the roller 1, since it is possible to detect, through for example the use of suitable probes, the temperature of the heat transfer fluid near the heating assembly 20 and the mantle wall 11.

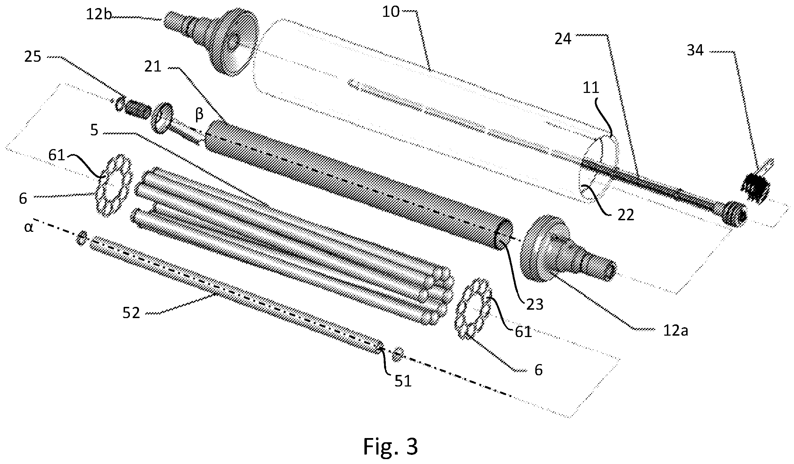

With reference now also to the example embodiment illustrated in figure 3, the heating assembly 20 comprises a hollow body 21, arranged internally and, preferably coaxially to the casing 10, so as to define an annular region 22 inside the roller 1.

It should be noted that, although all the embodiments described herein with reference to the attached figures, provide a particularly cylindrical elongated geometry of the casing 10 and of the hollow body 21, other geometries of these components are however possible, such as for example conical or generically prismatic geometries.

Returning to figure 3, the annular region 22 is therefore interposed between the mantle wall 11 and the cylindrical hollow body 21, the latter having inside it a heating chamber 23, fluidly insulated from the annular region 22, wherein the heating means 24 are inserted.

The heating means 24 are electrically connected to the manifold 31 and allow to heat, preferably by irradiation, the hollow cylindrical body 21. In a preferred embodiment, they are therefore spaced by an inner jacket of the heating chamber 23 and are in contact with air.

Preferably, the heating means 24 comprise an electric resistor which extends over the entire length of the heating chamber 23 and is advantageously removable from the latter.

It will be appreciated, in fact, that the heating chamber 23 comprises a removable element, in correspondence of a region proximal to an end of the casing 10, configured to facilitate insertion or extraction of the aforementioned resistor, and to facilitate the maintenance operations.

In the illustrated example, the electrical resistor 24 is supported at one of its ends through a support element 25 inserted in a hole 123b of the hub 12b distally from the manifold 31. The hub 12a, proximal to the manifold 31, is instead a removable element and it is provided with a through hole 123a which houses the electric resistor 24 and allows it to exit from the roller 1 with an attachment end 24a.

With further reference to the photographs illustrated in figures 8 and 9 by way of example, the attachment end 24a comprises a support shaft 25 on which a respective end of four separate resistors 24 is inserted. The support shaft 25 is further provided with an interface disk 26 downstream of which three tracks 27 are provided for sliding contacts with a respective brush 32.

The brushes 32 are inserted into an insulating rod 33 of a brush-holder support 34 intended to be fixed on the machine which houses the roller 1, the brush-holder support 34 being further provided with a cover 35 suitable for ensuring electrical insulation of the collector 31.

For this purpose, and as known in the art, the covering can, for example, be made of steel or other materials according to the required application requirements. Moreover, all the mechanical components can advantageously be protected with anti-oxidation treatments, electrochemical treatments or special paints to guarantee long life.

The tracks 27 for sliding contacts are for example made of bronze or brass, while the brushes 32 can be made of different materials according to the type of electrical signal required and in combination with the surface treatment of the tracks 27.

Returning to figure 3, the roller 1 further comprises filling means, indicated as a whole with the reference 5, which are arranged in the annular region 22 and are shaped in such a way as to partially occupy the latter.

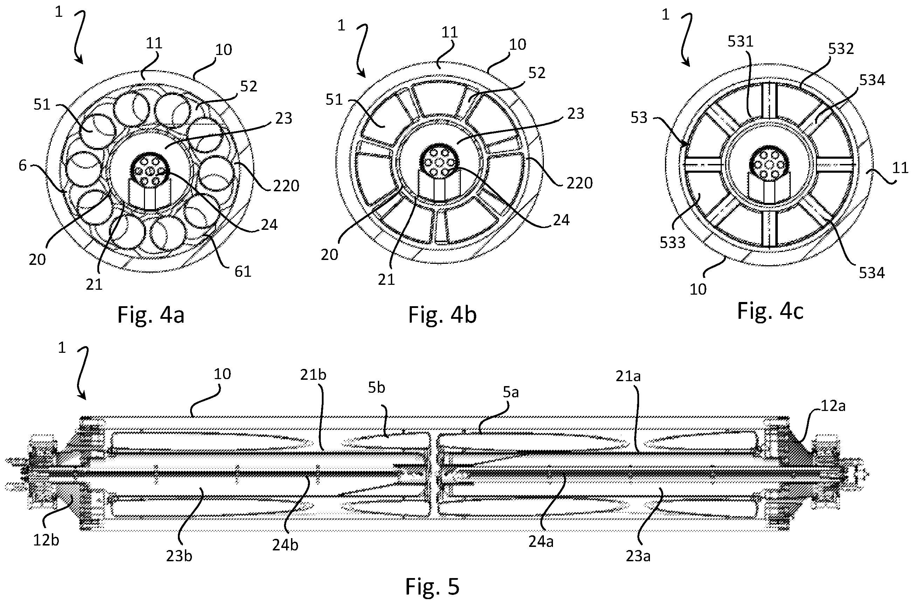

The annular region 22 thus comprises a residual volume 220 - better appreciable in figures 4A, 4B and 4C - intended to receive in use the aforementioned heat transfer fluid, and which is defined as the volume difference between the volume of the annular region 22 and the volume occupied from the filling means 5.

The residual volume 220 is furthermore configured so as to allow the fluid to completely immerse the heating assembly 20. In particular, the residual volume 220 allows to receive a quantity of heat transfer fluid, preferably synthetic oil, sufficient to allow the contact of the fluid with the entire surface of the hollow body 21 exposed in the residual volume 220 or, equivalently, with a surface which completely surrounds the hollow body 21 and is exposed in the residual volume 220.

In other words, the proposed configuration is such that, in specific embodiments, the heating assembly is always arranged below the level of free surface of the heat transfer fluid in each position of the roller.

The contact between the heating assembly and the fluid can occur in correspondence with the entire mantle surface of the hollow body or in regions thereof exposed to such contact.

Furthermore, exposure to the heat transfer fluid of the mantle surface of the hollow body can be partially mediated by intermediate means, for example a surface arranged circumscribed to the mantle itself and immersed in the heat transfer fluid.

At the same time, the residual volume 220 allows to receive also an amount of air such as to guarantee an expansion of the fluid, due to its increase in temperature during operation, at pressures inside the roller 1 preferably lower than 4 bars, even more preferably lower than 2 bars.

For this purpose, preferably, the residual volume 220 is 75% filled with heat transfer fluid and 25% filled with air.

In any case, the heating assembly 20 is completely immersed in the fluid in each operating position of the roller, meaning that all the positions assumed by the roller 1 are understood to be operating positions both in static conditions wherein it is stationary, and in dynamic conditions wherein the roller 1 is rotating.

Moreover, preferably, the ratio between the residual volume 220 and the volume occupied by the at least one hollow body 21 is comprised between the values greater than 1 and lower than or equal to 5, more preferably comprised between the values greater than 1 and lower than or equal to 4.

It will be appreciated that, advantageously, the fluid contacting in each point the surface of the hollow body 21 which faces the residual volume 220, is subject to lower risks of degenerative phenomena of its thermodynamic properties, mainly due to its contact with hot surfaces in presence of oxygen, that is preventing the overheating of regions, eventually not in contact with the fluid, of said surfaces.

In a preferred embodiment of the roller 1, the filling means 5 are provided internally with a closed cavity 51 which, in the examples shown in the figures, extends along the entire length of the filling means 5 and comprises preferably air within it.

However, embodiments may include filling means without a closed cavity, which are simply made as full elements.

Preferably, the roller 1 further comprises a pair of support elements 6 for supporting the filling means 5, each one coupled with one end of the hollow cylindrical body 21.

The latter is coupled to a central portion of a respective support element 6, and the filling means 5 are coupled to said pair of support elements 6 in such a way as to be spaced by the heating assembly 20.

With reference to figure 3, illustrated by way of non-limiting example, the filling means comprise a plurality of cylindrical tubular elements 52 arranged to surround the hollow cylindrical body 21. In detail, the tubular elements 52 develops each for a length at least equal to the length of the cylindrical body 21.

In the illustrated example, the pair of support elements 6 comprises a pair of disc-shaped elements, and each tubular element 52 is inserted with the ends in a corresponding seat of a plurality of seats 61 distributed spatially on a circular crown of the respective disc-shaped element 6.

Basically, the tubular elements 52 are inserted in a drum rack inserted inside the annular region 22 filled with heat transfer fluid.

In an advantageous embodiment, the tubular elements 52 of the roller 1 have also an axis of development α inclined with respect to the axis of development β of the hollow cylindrical body 21. In this way, it is possible to give swirling motions to the fluid present inside the residual volume 220 during the rotation of the roller 1, favoring the uniformity of the temperature on the mantle wall 11.

In any case, the section transverse to the development axis α of said filling means 5 is preferably circular, as better shown in figure 4A.

Construction variants of the filling means 5 can also be provided.

For example, the section transverse to their development axis α may have a substantially polygonal geometric shape, as illustrated in the example of figure 4B.

In the example of figure 4C, the filling means instead comprise a single tubular element 53. In this case, it is concentric with the casing 10 and comprises an outer wall 532 and an inner wall 531.

The outer wall 532 is facing towards the mantle wall 11 of the roller 1, while the inner wall 531 is facing the hollow cylindrical body 21. In figure 4C it is also appreciable that this single tubular element 53 comprises a cavity 533 closed between said external 532 and internal 531 walls, which cavity 533 is interrupted by a plurality of conduits 534, preferably radial to roller 1, suitable for promoting a circulation of fluid in the residual volume 220.

According to further advantageous embodiments, the roller 1 is configured with a heating assembly 20 comprising a first 21a and a second 21b hollow cylindrical body.

This embodiment is shown in figure 5, wherein it is appreciated that in this case the first 21a and the second cylindrical body 21b are axially aligned to substantially occupy the entire length of the casing 10. Each of them is provided with a respective heating chamber 23a, 23b housing corresponding heating means 24a, 24b, and each hollow body is surrounded by respective filling means 5a, 5b.

This configuration, similarly to what previously described in the case in which the roller 1 is provided with a single hollow cylindrical body, provides that the heating means contained in each chamber 23a, 23b come out of the roller 1 with an attachment end. In this case, in particular, the heating means each respectively come out from an opposite end of the roller 1.

The present invention has been herein described with reference to preferred embodiments. It is to be understood that each of the technical solutions implemented in the preferred embodiments, described here by way of example, may advantageously be combined differently to give rise to other embodiments which belong to the same inventive core and all however falling within the protection scope of the claims set forth below.

## Claims

1. A rotatable roller (1) for rotary machines comprising:
- a hollow casing (10) provided with a mantle wall (11) exposed, in use, to a heat transfer fluid;
- a heating assembly (20), in turn comprising:
∘ at least one hollow body (21) arranged internally, and preferably coaxially, to said casing (10) so as to define an annular region (22) between said mantle wall (11) and said hollow body (21), said hollow body (21) having an internal chamber (23) fluidically isolated from said annular region (22);
∘ heating means (24), housed inside said chamber (23) and adapted to heat said hollow body (21);
- filling means (5) arranged in said annular region (22) and formed so as to partially occupy said annular region (22), **characterized in** the overall configuration being such that within said annular region (22) remains defined a residual volume (220) intended to receive, in use, the heat transfer fluid in such a way as to allow the fluid to completely immerse the heating assembly (20) in each operational position of the roller.

2. The roller (1) according to claim 1, wherein said casing (10) and / or said at least one hollow body (21) have an elongated geometry, in particular cylindrical.

3. The roller (1) according to any one of the preceding claims, wherein said heating means (24) is configured to heat by radiation said at least one hollow body (21).

4. The roller (1) according to any one of the preceding claims, wherein the ratio between said residual volume (220) and the volume occupied by the hollow body (21) is comprised between the values greater than 1 and less than or equal to 5, preferably between values greater than 1 and less than or equal to 4.

5. The roller (1) according to any one of the preceding claims, wherein said filling means (5) comprises a plurality of elements (52) oblong in shape, preferably having a tubular construction, arranged to surround the at least one hollow body (21) and each growing for a length at least equal to the length of the hollow body (21).

6. The roller (1) according to claim 5, wherein the elements of said plurality each have a development axis (α) inclined with respect to the development axis (β) of the hollow body (21).

7. The roller (1) according to any one of claims from 1 to 5, wherein said filling means (5) comprises a single tubular element (53), preferably concentric to said casing (10), that is provided with an outer wall (532) facing towards the mantle wall (11) and with an inner wall (531) facing towards said hollow body (21).

8. The roller (1) according to claim 7, wherein said single tubular element (53) is traversed radially by a plurality of conduits (534) adapted to allow the circulation of the fluid in said residual volume (220).

9. The roller (1) according to any one of the preceding claims, wherein said filling means (5) is provided internally with a cavity (51), preferably closed, said cavity extending for the entire length of the filling means (5) and being preferably filled with air.

10. The roller (1) according to claim 7 or 8 and according to claim 9, wherein said inner (531) and outer (532) wall define between them said cavity (51).

11. The roller (1) according to any one of the preceding claims, further comprising at least one pair of support elements (6) for supporting said filling means (5).

12. The roller (1) according to claim 11, in which said support elements (6) are configured in such a way that each end of the hollow body (21) is coupled to a central portion of a respective support element (6), and wherein said filling means (5) are coupled to said at least one pair of support elements (6) so as to be spaced from the heating assembly (20).

13. The roller (1) according to claim 11 or 12, wherein each of said at least one pair of support elements (6) is a disc-shaped element having a plurality of seats (61) spatially distributed on a circular crown.

14. The roller (1) according to claim 13, wherein said filling means comprises a plurality of elements (52) having respective longitudinal ends each received in a corresponding seat (61) of a respective disc-shaped element.

15. The roller (1) according to any one of the preceding claims, wherein the cross section of the development axis (α) of said filling means (5) is circular.

16. The roller (1) according to any one of claims from 1 to 14, wherein the cross section of the development axis (α) of said filling means (5) has a substantially polygonal geometrical shape.

17. The roller (1) according to any one of the preceding claims, wherein the heating means (24) comprises an electric resistor.

18. The roller (1) according to any one of the preceding claims, wherein said heating means are removable with respect to said hollow body.

19. The roller (1) according to any one of the preceding claims, wherein the heating assembly (20) comprises a first (21a) and a second (21b) hollow body axially aligned between them and each comprising a chamber (23a, 23b), wherein heating means (24a, 24b) is housed in a respective chamber (23a, 23b).

20. The roller (1) according to any one of the preceding claims, further comprising a plurality of seats configured to allow insertion of detection means in said residual volume (220).

21. The roller (1) according to claim 20, wherein the casing (10) comprises a first and a second seat positioned respectively in correspondence of the mantle wall (11) and of the heating assembly (20).

22. The roller (1) according to any one of the preceding claims, further comprising coupling means (30), preferably of the electromechanical type, connected to said casing (10) and to said heating assembly (20) and configured to allow a rotation and/or a supply of said roller (1).

23. The roller (1) according to any one of the preceding claims, in which said roller is configured for use in a machine for processing hides.

24. A rotary machine, comprising a roller according to any one of the preceding claims.

25. Apparatus for processing hides, comprising a roller and/or a machine according to any one of the preceding claims.

## Patentansprüche

1. Drehbare Walze (1) für Rotationsmaschinen umfassend:
- ein hohles Gehäuse (10), das mit einer Mantelwand (11) versehen ist, die bei Verwendung einem Wärmeübertragungsfluid ausgesetzt ist;
- eine Heizbaugruppe (20) ihrerseits umfassend:
∘ wenigstens einen Hohlkörper (21) der im Inneren und vorzugsweise koaxial zu dem Gehäuse (10) angeordnet ist, um einen ringförmigen Bereich (22) zwischen der Mantelwand (11) und dem Hohlkörper (21) zu definieren, wobei der Hohlkörper (21) eine Innenkammer (23) hat, die von dem ringförmigen Bereich (22) fluidisch isoliert ist;
∘ Heizmittel (24), die im Inneren der Kammer (23) aufgenommen sind und die geeignet sind, den Hohlkörper (21) zu erwärmen;
- Füllmittel (5), die im ringförmigen Bereich (22) angeordnet sind und so gestaltet sind, dass sie den ringförmigen Bereich (22) teilweise ausfüllen; **dadurch gekennzeichnet,**
**dass** die Gesamtkonfiguration so ist, dass innerhalb des ringförmigen Bereiches (22) ein Restvolumen (220) definiert bleibt, das dazu bestimmt ist, bei Verwendung, das Wärmeübertragungsfluid so aufzunehmen, dass das Fluid die Heizbaugruppe (20) in jeder Betriebsposition der Walze vollständig eintaucht.

2. Walze (1) gemäß Anspruch 1, wobei das Gehäuse (10) und/oder der wenigstens eine Hohlkörper (21) eine längliche Geometrie hat, insbesondere eine zylindrische.

3. Walze (1) gemäß einem der vorhergehenden Ansprüche, wobei die Heizmittel (24) dazu eingerichtet sind, den wenigstens einen Hohlkörper (21) durch Strahlung zu erwärmen.

4. Walze (1) gemäß einem der vorhergehenden Ansprüche, wobei das Verhältnis zwischen dem Restvolumen (220) und dem von dem Hohlkörper (21) belegten Volumen zwischen den Werten größer als 1 und kleiner oder gleich 5, vorzugsweise zwischen Werten größer als 1 und kleiner oder gleich 4, liegt.

5. Walze (1) gemäß einem der vorhergehenden Ansprüche, wobei die Füllmittel (5) eine Vielzahl von Elementen (52) in länglicher Form umfassen, vorzugsweise mit einem röhrenförmigen Aufbau, die so angeordnet sind, dass sie den wenigstens einen Hohlkörper (21) umgeben, und sich jeweils über eine Länge ziehen, die wenigstens gleich der Länge des Hohlkörpers (21) ist.

6. Walze (1) gemäß Anspruch 5, wobei die Elemente der Vielzahl jeweils eine Entwicklungsachse (α) haben, die bezüglich der Entwicklungsachse (β) des Hohlkörpers (21) geneigt ist.

7. Walze (1) gemäß einem der Ansprüche 1 bis 5, wobei die Füllmittel (5) ein einzelnes röhrenförmiges Element (53) umfassen, vorzugweise konzentrisch zu dem Gehäuse (10), das mit einer Außenwand (532), die der Mantelwand (11) zugewandt ist, und mit einer inneren Wand (531), die dem Hohlkörper (21) zugewandt ist, versehen ist.

8. Walze (1) gemäß Anspruch 7, wobei das einzelne röhrenförmige Element (53) radial von einer Vielzahl von Leitungen (534) durchzogen ist, die dazu geeignet sind, die Zirkulation des Fluids in dem Restvolumen (220) zu erlauben.

9. Walze (1) gemäß einem der vorgehenden Ansprüche, wobei die Füllmittel (5) innen mit einem Hohlraum (51) versehen sind, vorzugsweise geschlossen, wobei der Hohlraum sich über die gesamte Länge der Füllmittel (5) erstreckt und vorzugsweise mit Luft gefüllt ist.

10. Walze (1) gemäß einem der Ansprüche 7 oder 8 und gemäß Anspruch 9, wobei die innere Wand (531) und die äußere Wand (532) zwischen sich dem Hohlraum (51) definieren.

11. Walze (1) gemäß einem der vorhergehenden Ansprüche, ferner umfassend: wenigstens ein paar Stützelemente (6) zum Stützen der Füllmittel (5).

12. Walze (1) gemäß Anspruch 11, wobei die Stützelemente (6) so ausgestaltet sind, dass jedes Ende des Hohlkörpers (21) an einen zentralen Abschnitt eines jeweiligen Stützelements (6) gekoppelt ist, und wobei die Füllmittel (5) an wenigstens ein Paar von Stützelementen (6) gekoppelt sind, sodass sie von der Heizbaugruppe (20) beabstandet sind.

13. Walze (1) gemäß Anspruch 11 oder 12, wobei jedes des wenigstens einen Paars von Stützelementen (6) ein scheibenförmiges Element ist, das eine Vielzahl von Sitzen (61) hat, die räumlich auf einer kreisförmigen Krone verteilt sind.

14. Walze (1) gemäß Anspruch 13, wobei die Füllmittel eine Vielzahl von Elementen (52) umfassen mit jeweiligen Längsenden, die jeweils in einem zugehörigen Sitz (61) eines entsprechenden scheibenförmigen Elements aufgenommen sind.

15. Walze (1) gemäß einem der vorhergehenden Ansprüche, wobei der Querschnitt der Entwicklungsachse (α) der Füllmittel (5) kreisförmig ist.

16. Walze (1) gemäß einem der Ansprüche 1 bis 14, wobei der Querschnitt der Entwicklungsachse (α) der Füllmittel (5) eine im Wesentlichen polygonale geometrische Form hat.

17. Walze (1) gemäß einem der vorhergehenden Ansprüche, wobei die Heizmittel (24) einen elektrischen Widerstand umfassen.

18. Walze (1) gemäß einem der vorhergehenden Ansprüche, wobei die Heizmittel vom Hohlkörper abnehmbar sind.

19. Walze (1) gemäß einem der vorhergehenden Ansprüche, wobei die Heizbaugruppe (20) einen ersten Hohlkörper (21a) und einen zweiten Hohlkörper (21b) umfasst, die zueinander axial ausgerichtet sind und jeweils eine Kammer (23a, 23b) umfassen, wobei Heizmittel (24a, 24b) in einer jeweiligen Kammer (23a, 23b) aufgenommen sind.

20. Walze (1) gemäß einem der vorhergehenden Ansprüche, ferner umfassend eine Vielzahl von Sitzen, die eingerichtet sind, um das Einsetzen von Detektionsmitteln in dem Restvolumen (220) zu erlauben.

21. Walze (1) gemäß Anspruch 20, wobei das Gehäuse (10) einen ersten und einen zweiten Sitz umfasst, die jeweils in Übereinstimmung mit der Mantelwand (11) und der Heizbaugruppe (20) angeordnet sind.

22. Walze (1) gemäß einem der vorhergehenden Ansprüche, ferner umfassend Verbindungsmittel (30) vorzugsweise vom elektromechanischen Typ, die mit dem Gehäuse (10) und der Heizbaugruppe (20) verbunden sind und die eingerichtet sind, um eine Rotation und/oder eine Versorgung der Walze (1) zu erlauben.

23. Walze (1) gemäß einem der vorhergehenden Ansprüche, wobei die Walze eingerichtet ist zur Verwendung einer Maschine zur Verarbeitung von Häuten.

24. Rotationsmaschine umfassend eine Walze gemäß einem der vorhergehenden Ansprüche.

25. Vorrichtung zur Verarbeitung von Häuten umfassend eine Walze und/oder eine Maschine gemäß einem der vorhergehenden Ansprüche.

## Revendications

1. Rouleau rotatif (1) pour machines rotatives comprenant :
un carter creux (10) prévu avec une paroi enveloppe (11) exposée, à l'usage, à un fluide de transfert de chaleur ;
un ensemble chauffant (20), comprenant à son tour :
au moins un corps creux (21) agencé intérieurement, et de préférence de manière coaxiale, sur ledit carter (10) afin de définir une région annulaire (22) entre ladite paroi enveloppe (11) et ledit corps creux (21), ledit corps creux (21) ayant une chambre interne (23) isolée, de manière fluidique, de ladite région annulaire (22) ;
un moyen de chauffage (24), logé à l'intérieur de ladite chambre (23) et adapté pour chauffer ledit corps creux (21) ;
un moyen de remplissage (5) agencé dans ladite région annulaire (22) et formé afin d'occuper partiellement ladite région annulaire (22), **caractérisé en ce que** la configuration globale est telle qu'à l'intérieur de ladite région annulaire (22), on définit un volume résiduel (220) prévu pour recevoir, à l'usage, le fluide de transfert de chaleur afin de permettre au fluide d'immerger complètement l'ensemble chauffant (20) dans chaque position opérationnelle du rouleau.

2. Rouleau (1) selon la revendication 1, dans lequel ledit carter (10) et/ou ledit au moins un corps creux (21) a/ont une géométrie allongée, en particulier cylindrique.

3. Rouleau (1) selon l'une quelconque des revendications précédentes, dans lequel ledit moyen de chauffage (24) est configuré pour chauffer, par rayonnement, ledit au moins un corps creux (21).

4. Rouleau (1) selon l'une quelconque des revendications précédentes, dans lequel le rapport entre ledit volume résiduel (220) et le volume occupé par le corps creux (21) est compris entre les valeurs supérieures à 1 et inférieures ou égales à 5, de préférence entre des valeurs supérieures à 1 et inférieures ou égales à 4.

5. Rouleau (1) selon l'une quelconque des revendications précédentes, dans lequel ledit moyen de remplissage (5) comprend une pluralité d'éléments (52) de forme oblongue, de préférence ayant une construction tubulaire, agencés pour entourer le au moins un corps tubulaire (21) et augmentant chacun sur une longueur au moins égale à la longueur du corps creux (21).

6. Rouleau (1) selon la revendication 5, dans lequel les éléments de ladite pluralité ont chacun un axe de développement (α) incliné par rapport à l'axe de développement (β) du corps creux (21).

7. Rouleau (1) selon l'une quelconque des revendications 1 à 5, dans lequel ledit moyen de remplissage (5) comprend un seul élément tubulaire (53), de préférence concentrique par rapport audit carter (10), qui est prévu avec une paroi externe (532) orientée vers la paroi enveloppe (11) et avec une paroi interne (531) orientée vers ledit corps creux (21).

8. Rouleau (1) selon la revendication 7, dans lequel ledit élément tubulaire (53) unique est traversé radialement par une pluralité de conduits (534) adaptés pour permettre la circulation du fluide dans ledit volume résiduel (220).

9. Rouleau (1) selon l'une quelconque des revendications précédentes, dans lequel ledit moyen de remplissage (5) est prévu intérieurement avec une cavité (51), de préférence fermée, ladite cavité s'étendant sur toute la longueur du moyen de remplissage (5) et étant de préférence remplie avec de l'air.

10. Rouleau (1) selon la revendication 7 ou 8 et selon la revendication 9, dans lequel lesdites paroi interne (531) et externe (532) définissent entre elles, ladite cavité (51).

11. Rouleau (1) selon l'une quelconque des revendications précédentes, comprenant en outre au moins une paire d'éléments de support (6) pour supporter ledit moyen de remplissage (5).

12. Rouleau (1) selon la revendication 11, dans lequel lesdits éléments de support (6) sont configurés de sorte que chaque extrémité du corps creux (21) est couplée à une partie centrale d'un élément de support (6) respectif, et dans lequel lesdits moyens de remplissage (5) sont couplés à ladite au moins une paire d'éléments de support (6) afin d'être espacés de l'ensemble chauffant (20).

13. Rouleau (1) selon la revendication 11 ou 12, dans lequel chacun de ladite au moins une paire d'éléments de support (6) est un élément en forme de disque ayant une pluralité de sièges (61) spatialement répartis sur une couronne circulaire.

14. Rouleau (1) selon la revendication 13, dans lequel ledit moyen de remplissage comprend une pluralité d'éléments (52) ayant des extrémités longitudinales respectives, chacune reçue dans un siège (61) correspondant d'un élément en forme de disque respectif.

15. Rouleau (1) selon l'une quelconque des revendications précédentes, dans lequel la section transversale de l'axe de développement (α) dudit moyen de remplissage (5) est circulaire.

16. Rouleau (1) selon l'une quelconque des revendications 1 à 14, dans lequel la section transversale de l'axe de développement (α) dudit moyen de remplissage (5) a une forme géométrique sensiblement polygonale.

17. Rouleau (1) selon l'une quelconque des revendications précédentes, dans lequel le moyen de chauffage (24) comprend une résistance électrique.

18. Rouleau (1) selon l'une quelconque des revendications précédentes, dans lequel lesdits moyens de chauffage sont amovibles par rapport audit corps creux.

19. Rouleau (1) selon l'une quelconque des revendications précédentes, dans lequel l'ensemble chauffant (20) comprend un premier (21a) et un second (21b) corps creux alignés de manière axiale entre eux et comprenant chacun une chambre (23a, 23b), dans lequel le moyen de chauffage (24a, 24b) est logé dans une chambre (23a, 23b) respective.

20. Rouleau (1) selon l'une quelconque des revendications précédentes, comprenant en outre une pluralité de sièges configurés pour permettre l'insertion du moyen de détection dans ledit volume résiduel (220).

21. Rouleau (1) selon la revendication 20, dans lequel le carter (10) comprend un premier et un second siège respectivement positionnés en correspondance de la paroi enveloppe (11) et de l'ensemble chauffant (20).

22. Rouleau (1) selon l'une quelconque des revendications précédentes, comprenant en outre un moyen de couplage (30), de préférence de type électromécanique, raccordé audit carter (10) et audit ensemble chauffant (20) et configuré pour permettre une rotation et/ou une alimentation dudit rouleau (1).

23. Rouleau (1) selon l'une quelconque des revendications précédentes, dans lequel ledit rouleau est configuré pour être utilisé sur une machine pour traiter des peaux.

24. Machine rotative comprenant un rouleau selon l'une quelconque des revendications précédentes.

25. Appareil pour le traitement des peaux, comprenant un rouleau et/ou une machine selon l'une quelconque des revendications précédentes.
